# EUROPÄISCHE PATENTSCHRIFT

(11) **EP 0 814 250 B1**
(45) Veröffentlichungstag und Bekanntmachung des Hinweises auf die Patenterteilung: **18.09.2002**
(21) Anmeldenummer: 97107652.6
(22) Anmeldetag: 09.05.1997
(51) Int. Cl.: F02D 41/22

(54) **Sicherheitssystem für ein Kraftfahrzeug**
Safety system for a motor vehicle
Système de sécurité pour véhicule à moteur

(30) Priorität: 21.06.1996 DE 19624825
(43) Veröffentlichungstag der Anmeldung: 29.12.1997
(73) Patentinhaber: DaimlerChrysler AG, 70567 Stuttgart (DE)
(72) Erfinder: Wolf, Hans-Christoph, Dr., 70597 Stuttgart (DE); Schenk, Jürgen, 73095 Albershausen (DE)

(56) Entgegenhaltungen:
- US-A- 4 940 030
- US-A- 5 018 383
- US-A- 5 370 094
- PATENT ABSTRACTS OF JAPAN vol. 095, no. 008, 29. September 1995 & JP 07 119522 A (NISSAN MOTOR CO LTD), 9. Mai 1995

## Beschreibung

Die Erfindung betrifft ein Sicherheitssystem für ein Kraftfahrzeug mit Brennkraftmaschine.

Aus der DE 39 14 167 A1 ist ein Sicherheitssystem für eine Kraftfahrzeug-Brennkraftmaschine bekannt, bei dem das Ausgangsmoment eines Getriebes überwacht wird. Falls das festgestellte Drehmoment bei nicht-gedrücktem Fahrpedal einen vorgegebenen Minimalwert übersteigt, so wird der Betrieb der Brennkraftmaschine unterbrochen. Dieses System weist den Nachteil auf, daß es nur bei nicht-gedrücktem Fahrpedal eingreift. Andere Fehlfunktionen können hiermit nicht erkannt werden.

Außerdem sind Systeme bekannt, bei denen als Eingangsgröße für die Überwachung die Drosselklappenstellung verwendet werden. Diese Systeme weisen den Nachteil auf, daß zur Regelung der Brennkraftmaschine und zur Überwachung eine einzige Größe verwendet wird. Tritt nun bei dieser Erfassung ein Fehler auf, so arbeiten sowohl die Motorsteuerung als auch die Überwachungseinrichtung mit der falschen Größe. Ein weiteres Problem dieser Überwachungseinrichtung ergibt sich bei Brennkraftmaschinen mit dynamischer Momenteneinstellung, da hier vor allem in dynamischen Betriebszuständen keine direkte Beziehung zwischen Drosselklappenstellung und Motorlast besteht. Somit kann die Überwachung bei solchen Brennkraftmaschinen nicht auf der Basis der Drosselklappenstellung erfolgen.

Es ist die Aufgabe der Erfindung, ein Sicherheitssystem für ein Kraftfahrzeug mit einer Brennkraftmaschine zu schaffen, mit dem die Sicherheit des Kraftfahrzeugs in allen Betriebsbereichen gewährleistet wird und das auch bei Brennkraftmaschinen mit dynamischer Momenteneinstellung verwendbar ist.

Die Aufgabe wird erfindungsgemäß durch die kennzeichnenden Merkmale des Patentanspruchs 1 gelöst.

Das erfindungsgemäße Sicherheitssystem weist den Vorteil auf, daß für die Motorsteuerung und für die Überwachung unabhängige Größen verwendet werden. Fällt die Erfassung einer der beiden Größen oder eines der beiden Steuergeräte aus, so kann das andere Steuergerät weiterhin ordnungsgemäß arbeiten und zumindest einen Notbetrieb oder das Außerbetriebsetzen der Brennkraftmaschine gewährleisten.

Wird das Sicherheitssystem bei einem Fahrzeug mit einem Traktionskontrollsystem eingesetzt, so kann das Sicherheitssystem in das Traktionskontrollsystem integriert werden. Dies hat den Vorteil, daß Traktionskontrollsysteme einen hochprioren Zugriff auf die Momentenvorgabe in der Motorsteuerung aufweisen. Für die Kommunikation zwischen Sicherheitssystem und Motorsteuerung können daher vorhandene Verbindungen verwendet werden.

Weitere Vorteile und Ausgestaltungen gehen aus den Unteransprüchen und der Beschreibung hervor. Die Erfindung ist nachstehend anhand einer Zeichnung, die den prinzipiellen Aufbau eines erfindungsgemäßen Sicherheitssystems zeigt, näher beschrieben.

Als Eingangsgrößen werden die Stellung FP eines Fahrpedals 1, zumindest ein den Betriebszustand der Brennkraftmaschine charakterisierender Betriebsparameter - beispielsweise die Motorlast Lastᵢₛₜ - und zumindest eine den Fahrzeugvortrieb charakterisierende Größe - beispielsweise die Wellendrehzahl nᵢₛₜ an einer beliebigen Stelle im Antriebsstrang des Fahrzeugs - ermittelt und über Datenleitungen einer Auswertevorrichtung 4 zur Verfügung gestellt. Gemäß Ausführungsbeispiel erfolgt die Lasterfassung indirekt über eine Messung des aktuellen Luftmassenstromes mᵢₛₜ in der Ansaugleitung 2 der nicht näher gezeigten Brennkraftmaschine. Der aktuelle Luftmassenstrom mᵢₛₜ kann beispielsweise mit Hilfe einer Drosselklappe 5 eingestellt und mit Hilfe eines Hitzdraht-Luftmassenmesser 6 bestimmt werden. Zur Ermittlung der Wellendrehzahl nᵢₛₜ ist beispielsweise am Anlasserzahnkranz der Brennkraftmaschine ein Drehzahlsensor vorgesehen.

Die Auswerte-Vorrichtung 4 wird im folgenden als Motorsteuergerät bezeichnet. Im Motorsteuergerät 4 wird nun in Block 7 aus der Fahrpedalstellung FP eine Fahrzeugvortriebs-Anforderung - beispielsweise ein Fahrerwunschmoment M_{soll-FP} - und daraus anschließend in Block 8 ein Sollwert für den den Betriebszustand der Brennkraftmaschine charakterisierenden Betriebsparameter - beispielsweise ein Last-Sollwert Lastₛₒₗₗ - ermittelt. Gleichzeitig wird in Block 9 aus dem aktuellen Luftmassenstrom mᵢₛₜ ein Last-Istwert Lastᵢₛₜ ermittelt, in Block 10 mit dem Last-Sollwert Lastₛₒₗₗ verglichen und ein Differenzwert Δ_{Last} bestimmt. Aus diesem Differenzwert Δ_{Last} wird dann schließlich in Block 11 ein Drosselklappen-Sollwert αₛₒₗₗ ermittelt und die Drosselklappe 5 mit Hilfe einer nicht gezeigten Drosselklappenverstellung auf diesen Sollwert αₛₒₗₗ eingestellt.

Die bisher beschriebenen Schritte dienen zur Regelung der Leistung der Brennkraftmaschine beziehungsweise des Fahrzeugs. Hierzu werden dem Motorsteuergerät 4 weitere Betriebsparameter, wie beispielsweise Motordrehzahl oder Motortemperatur, zur Verfügung gestellt. Außerdem werden durch das Motorsteuergerät 4 neben der Drosselklappenstellung auch noch weitere Betriebsparameter, beispielsweise Zündzeitpunkt (Block 15) oder Kraftstoffmenge (Block 16), beeinflußt. Solche Verfahren sind aus dem Stand der Technik, beispielsweise aus der DE 43 15 885 C1 bekannt und werden daher hier nicht weiter erläutert.

Bei Betriebsstörungen der Brennkraftmaschine, beispielsweise bei der Erfassung des Luftmassenstromes mᵢₛₜ oder bei der Einstellung der Drosselklappenposition αₛₒₗₗ, kann es zu Beeinträchtigungen des Betriebs oder gar zu einer erheblichen Beeinflussung der Betriebssicherheit des Fahrzeugs kommen. Insbesondere kann es vorkommen, daß sich die Drosselklappe 5 in vollständig geöffneter Position verklemmt. Daher ist es erforderlich, ein Sicherheitssystem vorzusehen, mit dem ein gefahrloser Betrieb des Fahrzeugs trotz Betriebsstörung ermöglicht oder zumindest eine Abschaltung der Brennkraftmaschine gewährleistet wird.

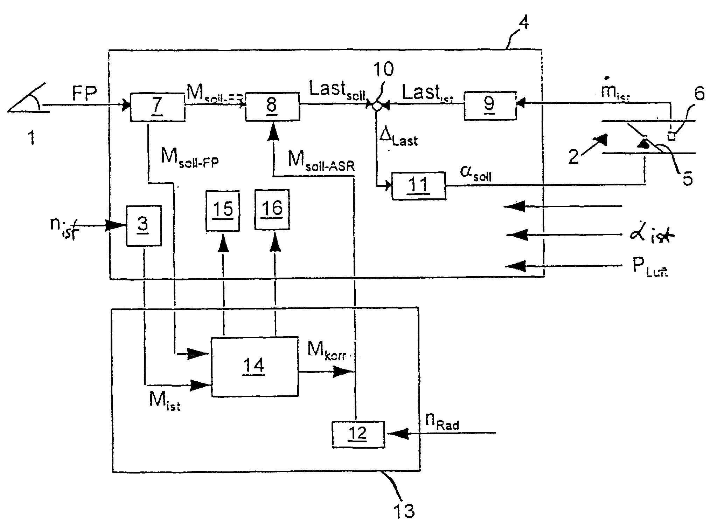

Gemäß dem in der Zeichnung dargestellten Ausführungsbeispiel ist hierzu an der Kurbelwelle der Brennkraftmaschine ein Drehzahlsensor vorgesehen. Aus dem Drehzahlsignal nᵢₛₜ wird in Block 3 durch zeitliche Ableitung und anschließende Multiplikation mit der Fahrzeugmasse der Fahrzeugvortriebs-Istwert in Form des Ausgangsmomentes Mᵢₛₜ - ermittelt. Beide Drehmomentwerte M_{soll-FP}, Mᵢₛₜ werden über Datenleitungen an eine zweite Auswerte-Vorrichtung 13 übertragen. Hierbei handelt es sich vorzugsweise um ein Traktionskontrollsystem. Es kann jedoch auch ein anderes Steuergerät verwendet werden. Solche Traktionskontrollsysteme sind ebenfalls aus dem Stand der Technik bekannt und werden daher hier nur noch kurz erläutert.

Bei dem in der Zeichnung dargestellten System handelt es sich um ein Antischlupf-Regelsystem, im folgenden als ASR-System bezeichnet. Bei solchen ASR-Systemen werden die Drehzahlen n_{Rad} mehrerer Fahrzeugräder miteinander verglichen und daraus Betriebszustände mit einem zu großen Antriebsschlupf ermittelt. Wird ein solcher Zustand erkannt, so wird vom ASR-Steuergerät 13 ein reduziertes Soll-Drehmoment M_{soll-ASR} erzeugt und an das Motorsteuergerät 4 übergeben. Im Motorsteuergerät 4 wird dieses reduzierte Soll-Drehmoment M_{soll-ASR} gegenüber dem Fahrerwunschmoment M_{soll-FP} mit erhöhter Priorität verarbeitet. Das heißt solange ein reduziertes Soll-Drehmoment M_{soll-ASR} vorliegt wird die Motorsteuerung auf der Basis dieses reduzierten Soll-Drehmoments M_{soll-ASR} durchgeführt. Nur falls kein reduziertes Soll-Drehmoment M_{soll-ASR} vorliegt erfolgt die Motorsteuerung auf der Basis des Fahrerwunschmomentes M_{soll-FP}. Die Ermittlung des Soll-Drehmomentes M_{soll-ASR} erfolgt im ASR-Steuergerät 13 (Block 12) und wird von dort an das Motorsteuergerät 4 (Block 8) übergeben.

Für die Überwachung der Motorsteuerung wird das Fahrerwunschmoment M_{soll-FP} (Block 7) und das Ausgangsmoment Mᵢₛₜ (Block 3) vom Motorsteuergerät 4 an das ASR-Steuergerät 13 (Block 14) übergeben. Dort werden die beiden Eingangsgrößen M_{soll-FP}, Mᵢₛₜ laufend verglichen und ein entsprechender Differenzwert ΔM berechnet. Im Normalbetrieb der Brennkraftmaschine sollten die beiden Eingangsgrößen M_{soll-FP}, Mᵢₛₜ, abgesehen von kleineren Schwankungen, im wesentlichen übereinstimmen. Lediglich beim Auftreten einer Fehlfunktion in der Signalerfassung, -übertragung oder -verarbeitung kann es hier zu Abweichungen kommen. Daher wird der Differenzwert ΔM laufend mit einem vorgegebenen Schwellwert M_{schwell} verglichen. Wird hierbei festgestellt, daß der Differenzwert ΔM über einen vorgegebenen Zeitraum den Schwellwert M_{schwell} übersteigt, so wird ein Fehler erkannt.

Im Falle eines solchen Fehlers können unterschiedliche Maßnahmen ergriffen werden. Im einfachsten Fall wird in Block 14 ein Fehlersignal erzeugt und dem Fahrer angezeigt und/oder in einem Speicher abgelegt. Allein aufgrund dieser Maßnahme kann die Betriebssicherheit der Brennkraftmaschine nicht gewährleistet werden. Zusätzlich kann es notwendig sein, in die Motorsteuerung einzugreifen. Eine Möglichkeit besteht darin, in Block 14 auf der Basis des Differenzwertes ΔM ein korrigiertes Soll-Drehmoment Mₖₒᵣᵣ zu ermitteln und an das Motorsteuergerät 4 zu übergeben. Hierzu wird vorzugsweise die für die ASR-Funktion vorgesehene Datenleitung zwischen Block 12 im ASR-Steuergerät 13 und Block 8 im Motorsteuergerät 4 verwendet. Dadurch wird auch das korrigierte Soll-Drehmoment Mₖₒᵣᵣ mit erhöhter Priorität im Motorsteuergerät 4 verarbeitet.

Im Betrieb der Brennkraftmaschine kann es nun vorkommen, daß sowohl ein korrigiertes Soll-Drehmoment Mₖₒᵣᵣ aufgrund der Überwachungsfunktion und gleichzeitig ein reduziertes Soll-Drehmoment M_{soll-ASR} aufgrund der Traktionskontrolle generiert wird. In diesem Fall ist es möglich, einen weiteren Block zum Vergleichen der beiden Soll-Drehmomente M_{soll-ASR}, Mₖₒᵣᵣ vorzusehen, wobei der kleinere der beiden Soll-Drehmomente M_{soll-ASR}, Mₖₒᵣᵣ an das Motorsteuergerät 4 übergeben wird.

Eine weitere Möglichkeit, auf das Erkennen eines Fehlerzustandes zu reagieren, besteht darin, das Ausgangsmoment Mᵢₛₜ durch einen Zündungseingriff, beispielsweise eine vorübergehende Früh- oder Spätverstellung des Zündzeitpunktes, zu reduzieren. Hierzu wird in Block 14 ein entsprechendes Fehlersignal erzeugt und über eine Datenleitung an die Zündungseinstellung (Block 15) im Motorsteuergerät 4 übergeben. Führt auch diese Maßnahme nicht dazu, daß das Ausgangsmoment Mᵢₛₜ auf einen Wert Mᵢₛₜ <= M_{soll-FP} beschränkt wird, so muß die Brennkraftmaschine gegebenenfalls durch eine Kraftstoffabschaltung außer Betrieb gesetzt werden. Hierzu wird wiederum in Block 14 ein entsprechendes Fehlersignal erzeugt und über eine weitere Datenleitung an die Kraftstoffdosierung (Block 16) im Motorsteuergerät 4 übergeben

Block 14 stellt somit das eigentliche Modul zur Überwachung der Brennkraftmaschine dar. Hier werden die Eingangsgrößen Fahrerwunschmoment M_{soll-FP} und Ausgangsmoment Mᵢₛₜ, die vom Motorsteuergerät 4 bereitgestellt werden, verglichen und bei einer Abweichung entsprechende Signale an das Motorsteuergerät 4 zurückgegeben, um durch eine Reduzierung der Lastvorgabe (Block 8), einen Zündungseingriff (Block 15) und/oder einer Kraftstoffabschaltung (16) ein überhöhtes Ausgangsmoment Mᵢₛₜ zu verhindern.

Der Austausch von Daten beziehungsweise Meßsignalen zwischen den einzelnen Sensoren und Auswertevorrichtungen 4, 13 kann über beliebige Datenverbindungen realisiert werden. Im einfachsten Fall werden alle Geräte mit einfachen elektrischen Leitungen verbunden. Falls vorhanden kann der Datenaustausch jedoch auch über einen im Fahrzeug vorgesehenen Datenbus erfolgen. Dies hat den Vorteil, daß alle Informationen an allen angeschlossenen Geräten zur Verfügung stehen. Für den Fall, daß das Motorsteuergerät 4 oder der Datenbus ausfällt, weißt die Drosselklappenverstellung im allgemeinen eine mechanische Vorrichtung, beispielsweise in Form einer Feder, auf, die die Drosselklappe 5 in Schließstellung überführt, so daß die Brennkraftmaschine im Leerlauf betrieben wird. Selbstverständlich kann für diesen Fall jedoch auch vorgesehen werden, daß die Brennkraftmaschine durch eine Abschaltung der Kraftstoffzufuhr stillgesetzt wird.

Das beschriebene Sicherheitssystem weist den Vorteil auf, daß zur Regelung beziehungsweise zur Überwachung der Brennkraftmaschine unabhängige Größen verwendet werden. Zur Regelung wird eine beliebige, die Motorlast Lastᵢₛₜ charakterisierende Betriebsgröße erfaßt. Zusätzlich zum oder anstelle vom momentanen Luftmassenstrom mᵢₛₜ kann hier auch der Saugrohrdruck p_{Luft} und/oder die Drosselklappenstellung αᵢₛₜ verwendet werden. Zur Steuerung der Brennkraftmaschine wird ebenfalls eine beliebige, die Motorlast Lastᵢₛₜ beeinflussende Größe, beispielsweise die Drosselklappenstellung αᵢₛₜ, vom Motorsteuergerät 4 eingestellt. Zur Überwachung wird zusätzlich das Ausgangsmoment Mᵢₛₜ des Fahrzeugs auf der Basis der Wellendrehzahl nᵢₛₜ ermittelt.

Fällt nun die Erfassung des Luftmassenstromes mᵢₛₜ aus, so wird die Motorregelung fehlerhaft arbeiten. Das Sicherheitssystem arbeitet jedoch unabhängig von dieser Eingangsgröße und kann daher die Brennkraftmaschine, wie bereits oben beschrieben, in einen Notbetrieb umschalten oder stillsetzen. Fällt auf der anderen Seite die Erfassung des Ausgangsmomentes Mᵢₛₜ aus, so fällt zwar das Traktionskontrollsystem und das Sicherheitssystem aus, die Motorsteuerung kann jedoch auf der Basis des Luftmassenstromes mᵢₛₜ weiterhin ordnungsgemäß arbeiten. Für den unwahrscheinlichen Fall, daß die Erfassung sowohl des Luftmassenstromes mᵢₛₜ als auch des Ausgangsmomentes Mᵢₛₜ ausfällt, ist ein sicherer Betrieb der Brennkraftmaschine jedoch nicht mehr möglich, da sowohl die Motorsteuerung als auch das Sicherheitssystem ausfallen. In diesem Fall muß die Brennkraftmaschine stillgesetzt werden.

Ein weiterer wesentlicher Vorteil besteht darin, daß das beschriebene Sicherheitssystem auch bei Fahrzeugen mit einer sogenannten dynamischen Momenteneinstellung verwendet werden kann. Da bei solchen Motorsteuerungen insbesondere in dynamischen Betriebszuständen keine direkte Kopplung zwischen Drosselklappenstellung αᵢₛₜ und Fahrerwunschmoment M_{soll-FP} mehr besteht, ist es nicht mehr möglich, die Überwachung auf der Basis des Drosselklappenwinkels αᵢₛₜ auszuführen.

Gemäß Ausführungsbeispiel wird das Fahrerwunschmoment Mₛₒₗₗ auf der Basis der Fahrpedalstellung FP ermittelt. Es ist jedoch auch möglich, hierzu andere geeignete Eingangsgrößen, beispielsweise das Ausgangssignal einer automatischen Geschwindigkeitsregelung, zu verwenden. Auch für die Erfassung des Ausgangsmomentes Mᵢₛₜ sind neben der im Ausführungsbeispiel beschriebenen Erfassung der Kurbelwellendrehzahl nᵢₛₜ noch weitere Möglichkeiten gegeben. Prinzipiell kann das Ausgangsmoment Mᵢₛₜ an einer beliebigen Stelle des Antriebstranges ermittelt werden. Lediglich die Definition der Momentenschnittstelle muß an die gewählte Stelle im Triebstrang angepaßt werden.

Vorteilhaft für das Sicherheitssystem ist es, wenn in dem Fahrzeug zusätzlich ein Traktionskontrollsystem vorgesehen ist. Hierbei kann es sich um ein einfaches System, beispielsweise in Form eines Antiblockiersystems, oder auch um ein aufwendigeres System, wie Antischlupf- oder Fahrdynamikregelung, handeln. Bei solchen Traktionskontrollsystemen werden die Drehzahlen einzelner oder aller Räder erfaßt und ausgewertet. In solch einem Fall wird das Sicherheitssystem vorzugsweise in das Traktionskontrollsystem 13 integriert. Dies hat den Vorteil, daß für das Traktionskontrollsystem 13 bereits ein hochpriorer Zugang zum Motorsteuergerät 4 vorgesehen ist. Am Ausgang des Traktionskontrollsystems 13 wird daher einfach anstelle des reduzierten Soll-Drehmomentes M_{soll-ASR} das korrigierte Soll-Drehmoment Mₖₒᵣᵣ des Sicherheitssystems angelegt. Die Kommunikation zwischen den beiden Steuergeräten 4, 13 muß daher nicht speziell an das Sicherheitssystem angepaßt werden. Prinzipiell ist es auch möglich, beide Steuergeräte 4, 13, eventuell zusammen mit weiteren Funktionen, in einem gemeinsamen Steuergerät unterzubringen.

Das anhand der Zeichnung beschriebene Sicherheitssystem stellt nur ein mögliches Ausführungsbeispiel dar. Daher soll sich der Schutzbereich nicht auf das dargestellte Beispiel beschränken. Vielmehr kann der erfindungsgemäße Gedanke auf nahezu alle Motorsteuerungen angewendet werden. Als charakterisierende Größe für den Betriebszustand der Brennkraftmaschine kommt hierbei nicht nur die Motorlast Lastᵢₛₜ in Frage. Der Betriebszustand kann vielmehr auch charakterisiert werden durch den Wirkungsgrad - beispielsweise als Funktion von Zündzeitpunkt, Lambda oder Kraftstoffabschaltung - , die Anzahl der Verbraucher - beispielsweise Klimaanlage oder Lichtmaschine -, oder den Zustandsparametern für die Funktionen Zylinderabschaltung, sequentielle Kraftstoffabschaltung, Gang, Gangwechsel, oder Kraftübertragung. Selbstverständlich kann auch eine Kombination mehrerer dieser oder weiterer Größen verwendet werden. Prinzipiell kommen hier alle Größen, die den Zustand der Brennkraftmaschine und damit direkt oder indirekt den Vortrieb des Fahrzeuges beeinflussen, als Eingangsgröße in Frage.

Als Fahrzeugvortriebs-Anforderung kommen neben dem Sollmoment auch Sollbeschleunigung oder Solldrehzahl, jeweils gemessen an der Motorwelle, Getriebewelle oder direkt am Fahrzeugrad, in Frage. Weiterhin kann auch die Kraftstoffmengenvorgabe, die Drosselklappenwinkelanforderung oder Sollwerte für den Luftmassenstrom oder die Last verwendet werden. Als Meßgröße für den Fahrzeugvortrieb kann neben der Raddrehzahl auch die Drehzahl, die Beschleunigung oder das Moment an einer beliebigen Stelle im Antriebsstrang erfaßt werden. Zusätzlich kommen auch der Fahrzeuggier-, -nick- oder -wankwinkel in Frage.

Entscheidend ist lediglich das Prinzip, auf der Basis des Fahrerwunsches zwei Sollwerte zu ermitteln, wobei ein Sollwert dem gewünschten Fahrzeugvortrieb entspricht und der andere Sollwert eine Steuer- oder Regelgröße der Brennkraftmaschine zur Einstellung des gewünschten Fahrzeugvortriebs betrifft. Außerdem werden zwei unabhängige Meßwerte erfaßt, aus denen jeweils ein dem entsprechenden Sollwert zugeordneter Istwert ermittelt wird. Schließlich sind zwei unabhängige Steuergeräte vorgesehen, wobei das eine Steuergerät zur Steuerung oder Regelung der Brennkraftmaschine, sowie zur Ermittlung des Soll- und Istwertes für den Fahrzeugvortrieb dient, und das zweite Steuergerät den Betrieb der Brennkraftmaschine anhand der vom ersten Steuergerät bereitgestellten Soll- und Istwerte für den Fahrzeugvortrieb überwacht und gegebenenfalls Steuerbefehle an das erste Steuergerät zur Korrektur einer Fehlfunktion oder zum Außerbetriebsetzen der Brennkraftmaschine sendet.

## Patentansprüche

1. Sicherheitssystem für ein Kraftfahrzeug mit Brennkraftmaschine mit Vorrichtungen zur Erfassung
- der Fahrpedalstellung (FP),
- zumindest eines den Betriebszustand der Brennkraftmaschine charakterisierenden Betriebsparameters (Lastᵢₛₜ), und
- zumindest einer den Fahrzeugvortrieb charakterisierenden Größe (nᵢₛₜ),
mit einer ersten Auswerte-Vorrichtung (4)
- zur Ermittlung einer Fahrzeugvortriebs-Anforderung (M_{soll-FP}) und eines Sollwertes für den den Betriebszustand der Brennkraftmaschine charakterisierenden Betriebsparameter (Lastₛₒₗₗ) auf der Basis der Fahrpedalstellung (FP),
- zur Ermittlung des Fahrzeugvortrieb-Istwertes (Mᵢₛₜ) auf der Basis der zumindest einen den Fahrzeugvortrieb charakterisierenden Größe (nᵢₛₜ), und
- zur Einstellung des den Betriebszustand der Brennkraftmaschine charakterisierenden Betriebsparameter (Lastᵢₛₜ) auf den ermittelten Sollwert (Lastₛₒₗₗ), und
mit einer zweiten Auswerte-Vorrichtung (13) zum laufenden Vergleich der von der ersten Auswerte-Vorrichtung (4) bereitgestellten Fahrzeugvortriebswerte (Mᵢₛₜ, M_{soll-FP}), wobei bei einer Abweichung des Istwertes (Mᵢₛₜ) vom Sollwert (M_{soll-FP}) ein Fehler erkannt wird.

2. Sicherheitssystem nach Anspruch 1,
**dadurch gekennzeichnet,**
**daß** eine Abweichung dann erkannt wird, wenn die Differenz (ΔM = Mᵢₛₜ - M_{soll-FP}) zwischen den Fahrzeugvortriebswerten (Mᵢₛₜ, M_{soll-FP}) über einen vorgegebenen Zeitraum einen vorgegebenen Schwellwert (M_{schwell}) übersteigt.

3. Sicherheitssystem nach Anspruch 1,
**dadurch gekennzeichnet,**
**daß** dann, wenn ein Fehler erkannt wird, in der zweiten Auswerte-Vorrichtung (13) eine korrigierte Fahrzeugvortriebs-Anforderung (Mₖₒᵣᵣ) auf der Basis des Differenzwertes (ΔM) ermittelt und mit höherer Priorität an die erste Auswerte-Vorrichtung (4) übergeben wird.

4. Sicherheitssystem nach Anspruch 3,
**dadurch gekennzeichnet,**
**daß** dann, wenn ein Fehler erkannt wird, von der zweiten Auswerte-Vorrichtung (13) ein Signal zur Reduzierung des Fahrzeugvortriebs-Istwertes (Mᵢₛₜ) an die Zündverstellung (15) in der ersten Auswerte-Vorrichtung (4) übergeben wird.

5. Sicherheitssystem nach Anspruch 4,
**dadurch gekennzeichnet,**
**daß** dann, wenn trotz Zündungseingriff der Fahrzeugvortriebs-Istwert (Mᵢₛₜ) die Fahrzeugvortriebs-Anforderung (M_{soll-FP}) übersteigt, von der zweiten Auswerte-Vorrichtung (13) ein Signal zur Kraftstoffabschaltung an die Kraftstoffdosierung (16) in der ersten Auswerte-Vorrichtung (4) übergeben wird.

6. Sicherheitssystem nach Anspruch 1,
**dadurch gekennzeichnet,**
**daß** dann, wenn eine Abweichung erkannt wird, ein Fehlersignal erzeugt und dem Fahrer angezeigt und/oder in einem Speicher abgelegt wird.

7. Sicherheitssystem nach Anspruch 1,
**dadurch gekennzeichnet,**
**daß** die zweite Auswerte-Vorrichtung (13) ein Traktionskontrollsystems ist.

8. Sicherheitssystem nach Anspruch 1,
**dadurch gekennzeichnet,**
- **daß** neben der Fahrpedalstellung (FP) ein die Motorlast (Lastᵢₛₜ) kennzeichnender Betriebsparameter (mᵢₛₜ) und ein das Ausgangsmoment (Mᵢₛₜ) der Brennkraftmaschine kennzeichnender Betriebsparameter (nᵢₛₜ) erfaßt wird,
- **daß** in der ersten Auswerte-Vorrichtung (4) ein Fahrerwunschmoment (M_{soll-FP}) auf der Basis der Fahrpedalstellung (FP), ein Ausgangsmoment (Mᵢₛₜ) auf der Basis des Betriebsparameters (nᵢₛₜ) und ein Last-Sollwert (Lastₛₒₗₗ) auf der Basis des Fahrerwunschmomentes (M_{soll-FP}) ermittelt wird und der Last-Istwert (Lastᵢₛₜ) durch Beeinflussung eines die Motorlast (Lastᵢₛₜ) beeinflussenden Betriebsparameters (αᵢₛₜ) auf den Last-Sollwert (Lastₛₒₗₗ) eingestellt wird, und
- **daß** in der zweiten Auswerte-Vorrichtung (13) die von der ersten Auswerte-Vorrichtung (4) bereitgestellten Drehmomente (Mᵢₛₜ, M_{soll-FP}) verglichen und bei einer Abweichung des Ausgangsmomentes (Mᵢₛₜ) vom Fahrerwunschmoment (M_{soll-FP}) ein Fehler erkannt wird.

## Claims

1. Safety system for a motor vehicle with an internal combustion engine having devices for detecting
- the accelerator pedal position (FP),
- at least one operating parameter (Lastᵢₛₜ) **characterising** the operating state of the internal combustion engine, and
- at least one variable (nᵢₛₜ) **characterising** the vehicle propulsion,
having a first evaluation system (4)
- for determining a vehicle propulsion-command (M_{soll-FP}) and a desired value for the operating parameter (Lastₛₒₗₗ) **characterising** the operating state of the internal combustion engine on the basis of the accelerator pedal position (FP),
- for determining the vehicle propulsion-actual value (Mᵢₛₜ) on the basis of the at least one variable (nᵢₛₜ) **characterising** the vehicle propulsion, and
- for adjusting the operating parameter (Lastᵢₛₜ) **characterising** the operating state of the internal combustion engine to the determined desired value (Lastₛₒₗₗ), and
having a second evaluation system (13) for running a continuous comparison of the vehicle propulsion values (Mᵢₛₜ, M_{soll-FP}) supplied by the first evaluation system (4), an error being detected if the actual value (Mᵢₛₜ) varies from the desired value (M_{soll-FP}).

2. Safety system as claimed in claim 1,
**characterised in that**
a variance is detected if the difference (ΔM = Mᵢₛₜ - M_{soll-FP}) between the vehicle propulsion values (Mᵢₛₜ, M_{soll-FP}) exceeds a predetermined threshold value (M_{schwell}) for a pre-set period of time.

3. Safety system as claimed in claim 1,
**characterised in that**
when an error is detected, a corrected vehicle propulsion-command (Mₖₒᵣᵣ) is determined in the second evaluation system (13) on the basis of the differential value (ΔM) and is transmitted to the first evaluation system (4) with a higher priority.

4. Safety system as claimed in claim 3,
**characterised in that**
when an error is detected, a signal is transmitted from the second evaluation system (13) to the ignition control (15) in the first evaluation system (4) in order to reduce the vehicle propulsion-actual value (Mᵢₛₜ).

5. Safety system as claimed in claim 4,
**characterised in that**
if the vehicle propulsion-actual value (Mᵢₛₜ) exceeds the vehicle propulsion-command (M_{soll-FP}) in spite of intervening in the ignition system, a signal is transmitted from the second evaluation system (13) to the fuel metering system (16) in the first evaluation system (4) in order to shut off the fuel.

6. Safety system as claimed in claim 1,
**characterised in that**
when a variance is detected, an error signal is generated and indicated to the driver and/or stored in a memory.

7. Safety system as claimed in claim 1,
**characterised in that**
the second evaluation system (13) is a traction control system.

8. Safety system as claimed in claim 1,
**characterised in that**
- in addition to the accelerator pedal position (FP), an operating parameter (mᵢₛₜ) **characterising** the engine load (Lastᵢₛₜ) and an operating parameter (nᵢₛₜ) **characterising** the output torque (Mᵢₛₜ) of the internal combustion engine is detected,
- in the first evaluation system (4), a driver-commanded torque (M_{soll-FP}) is determined on the basis of the accelerator pedal position (FP), an output torque (Mᵢₛₜ) on the basis of the operating parameter (nᵢₛₜ) and a load-desired value (Lastₛₒₗₗ) on the basis of the driver-commanded torque (M_{soll-FP}) and the load-actual value (Lastᵢₛₜ) is adjusted to the load-desired value (Lastₛₒₗₗ) by acting on an operating parameter (αᵢₛₜ) influencing the engine load (Lastᵢₛₜ),
- in the second evaluation unit (13), the torques (Mᵢₛₜ, M_{soll-FP}) supplied by the first evaluation unit (4) are compared and an error is detected if there is a variance between the output torque (Mᵢₛₜ) and the driver-commanded torque (M_{soll-FP}).

## Revendications

1. Système de sécurité pour un véhicule automobile comportant un moteur à combustion interne, comprenant des dispositifs pour détecter
- la position (FP) de la pédale d'accélération,
- au moins un paramètre de fonctionnement (Lastᵢₛₜ) qui **caractérise** l'état de fonctionnement du moteur à combustion interne, et
- au moins une grandeur (nᵢₛₜ), caractérisant l'avance du véhicule,
comportant un premier dispositif d'évaluation (4)
- pour déterminer une demande (M_{soll-FP}) d'avance du véhicule et d'une valeur de consigne pour le paramètre de fonctionnement (Lastₛₒₗₗ), qui **caractérise** l'état de fonctionnement du moteur à combustion interne, sur la position de la position (FP) de la pédale d'accélérateur,
- pour déterminer la valeur réelle (Mᵢₛₜ) de l'avance du véhicule sur la base de la au moins une grandeur (nᵢₛₜ) caractérisant l'avance du véhicule, et
- pour régler le paramètre de fonctionnement (Lastᵢₛₜ), qui **caractérise** l'état de fonctionnement du moteur à combustion interne, sur la valeur de consigne déterminée (Lastₛₒₗₗ), et
un second dispositif d'évaluation (13) pour comparer de façon permanente les valeurs (Mᵢₛₜ, M_{soll-FP}) de l'avance du véhicule, préparées par le premier dispositif d'évaluation (4), auquel cas lors d'un écart entre la valeur réelle (Mᵢₛₜ) et la valeur de consigne (M_{soll-FP}), un défaut est identifié.

2. Système de sécurité selon la revendication 1, **caractérisé en ce qu'**un écart est identifié lorsque la différence (ΔM = Mᵢₛₜ - M_{soll-FP}) entre les valeurs (Mᵢₛₜ, M_{soll-FP}) de l'avance du véhicule dépasse, pendant un intervalle de temps prédéterminé, une valeur de seuil prédéterminée (M_{schwell}).

3. Système de sécurité selon la revendication 1, **caractérisé en ce que** lorsqu'un défaut est identifié, dans le second dispositif d'évaluation (13) une demande corrigée d'avance du véhicule (Mₖₒᵣᵣ) est déterminée sur la base de la valeur de différence (ΔM) et est transférée avec une priorité supérieure au premier dispositif d'évaluation (4).

4. Système de sécurité selon la revendication 3, **caractérisé en ce que**, lorsqu'un défaut est identifié, un signal pour réduire la valeur réelle (Mᵢₛₜ) de l'avance du véhicule, est transféré par le second dispositif d'évaluation (13) au dispositif (15) de réglage de l'allumage dans le premier dispositif d'évaluation (4).

5. Système de sécurité selon la revendication 4, **caractérisé en ce que**, lorsqu'en dépit de l'activation de l'allumage la valeur réelle (Mᵢₛₜ) de l'avance du véhicule dépasse la demande (M_{soll-FP}) d'avance du véhicule, un signal d'interruption du carburant (16) est envoyé par le second dispositif d'évaluation (13) au système de dosage de carburant situé dans le premier dispositif d'évaluation (4).

6. Système de sécurité selon la revendication 1, **caractérisé en ce qu'**un écart est identifié, un signal de défaut est produit et est affiché au conducteur et/ou est mémorisé dans une mémoire.

7. Système de sécurité selon la revendication 1, **caractérisé en ce que** le second dispositif d'évaluation (13) est un système de contrôle de traction.

8. Système de sécurité selon la revendication 1, **caractérisé en ce**
- **qu'**en dehors de la position (FP) de la pédale d'accélérateur, un paramètre de fonctionnement (mᵢₛₜ), qui **caractérise** la charge du moteur (Lastᵢₛₜ), et un paramètre de fonctionnement (nᵢₛₜ), qui **caractérise** le couple de sortie (Mᵢₛₜ) du moteur à combustion interne, sont détectés,
- **que** dans le premier dispositif d'évaluation (4), un couple souhaité par le conducteur (M_{soll-FP}) est déterminé sur la base de la position (FP) de la pédale d'accélérateur, un couple de sortie (Mᵢₛₜ) est déterminé sur la base du paramètre de fonctionnement (nᵢₛₜ) et une valeur de consigne de la charge (lastₛₒₗₗ) est déterminée sur la base du couple désiré par le conducteur (M_{soll-FP}) et la valeur réelle de la charge (Lastᵢₛₜ) est réglée par influence sur un paramètre de fonctionnement (αᵢₛₜ), qui influe sur la charge (Lastᵢₛₜ) du moteur et est réglé sur la valeur de consigne de la charge (Lastₛₒₗₗ), et
- **que** dans le second dispositif d'évaluation (13), les couples (Mᵢₛₜ, M_{soll-FP}), qui sont préparés par le premier dispositif d'évaluation (4), sont comparés et, dans le cas d'un écart du couple de sortie (Mᵢₛₜ) par rapport au couple désiré par le conducteur (M_{soll-FP}) un défaut est identifié.
